# EUROPÄISCHE PATENTSCHRIFT

(11) **EP 2 081 793 B1**
(45) Veröffentlichungstag und Bekanntmachung des Hinweises auf die Patenterteilung: **30.03.2011**
(21) Anmeldenummer: 07819535.1
(22) Anmeldetag: 02.11.2007
(51) Int. Cl.: B60M 1/30

(54) **VERBUNDPROFIL MIT EINEM TRAGKÖRPER AUS LEICHTMETALLWERKSTOFF SOWIE EINEM PROFILBAND UND VERFAHREN ZUM HERSTELLEN DES VERBUNDPROFILS**
COMPOSITE PROFILED ELEMENT HAVING A CARRIER BODY CONSISTING OF A LIGHT METAL MATERIAL AND A PROFILED STRIP, AND METHOD FOR PRODUCING SAID COMPOSITE PROFILED ELEMENT
PROFILÉ COMPOSITE PRÉSENTANT UN CORPS SUPPORT EN MATÉRIAU À BASE DE MÉTAL LÉGER AINSI QU'UNE BANDE PROFILÉE ET PROCÉDÉ DE FABRICATION DU PROFILÉ COMPOSITE

(30) Priorität: 24.11.2006 DE 102006055956; 29.12.2006 DE 102006062014; 24.01.2007 DE 102007003553
(43) Veröffentlichungstag der Anmeldung: 29.07.2009
(73) Patentinhaber: 3A Technology & Management AG, 8212 Neuhausen am Rheinfall (CH)
(72) Erfinder: WÖMPNER, Diethelm, 78351 Bodman-Ludwigshafen (DE); NETZEL, Timo, 78269 Volkertshausen (DE)
(74) Vertreter: Vötsch, Reiner
(86) Internationale Anmeldenummer: PCT/EP2007/009508
(87) Internationale Veröffentlichungsnummer: WO 2008/061615

(56) Entgegenhaltungen:
- WO-A-2006/081863
- WO-A-2007/098881
- DE-A1- 4 410 688
- US-B1- 6 983 834

## Beschreibung

Die Erfindung betrifft ein Verbundprofil mit einem aus Leichtmetallwerkstoff stranggepressten schienenartigen Trägerprofil sowie einem dessen Kopffläche aufliegenden Profilband aus einem härteren Metall nach dem Oberbegriff des Patentanspruches 1. Zudem erfasst die Erfindung ein Verfahren zum Herstellen eines solchen Verbundprofiles.

Ein derartiges Verbundprofil ist aus der WO 2006/081863 A1 der Anmelderin bekannt. Ausgehend von dem bekannten Verbundprofil liegt der Erfindung die Aufgabe zugrunde, eine verbesserte Verbindung zwischen dem Profilband und dem Einschubstab zu ermöglichen, bei der unter anderem ein Verschieben des Profilbandes aufgrund thermischer Belastungen vermieden wird. Diese Aufgabe wird bei einem Verbundprofil mit den Merkmalen des Anspruchs 1 gelöst. Vorteilhafte Weiterbildungen des erfindungsgemäßen Verbundprofils sind in den Unteransprüchen angegeben.

Nach einem weiteren Merkmal der Erfindung soll der zur Längsachse des Profilbandes hin gerichtete andere Rinnenschenkel mit dem äußeren Rinnenschenkel einen Öffnungswinkel von weniger als 90° einschließen sowie in einem zur Querschnittslängsachse des Trägerprofils -- in einem entsprechenden Winkel geneigten -- Schlitz lagern; dieser Öffnungswinkel des Rinnenquerschnitts misst etwa 60° bis 70°, bevorzugt 65°.

Vorteilhafterweise verläuft die Längskante des äußeren Rinnenschenkels in einem geringen axialen Parallelabstand zum freien Ende des anderen Rinnenschenkels, d.h. die beiden Schenkelenden bestimmen fast eine gemeinsame Ebene.

Im Rahmen der Erfindung liegt, dass die Schweißnaht einen etwa dreiecksförmigen Querschnitt mit zwei zueinander rechtwinkeligen Seiten aufweist, deren eine der Stirnfläche des Profilbandes und deren andere Seite der Außenfläche des zugeordneten Rinnenschenkels des Einschubstabes angeformt ist. In einer bevorzugten Ausgestaltung sind die beiden Seiten des etwa gleichschenkeligen Querschnittes der Schweißnaht durch eine Hypotenuse als Pultfläche verbunden.

Als günstig hat es sich erwiesen, die Schweißnaht mit ihrer Pultfläche an der Außenkante der Stirnfläche des Profilbandes ansetzen zu lassen; die Querschnittsbreite der Schweißnaht entspricht dabei etwa der Dicke des Einschubstabes.

In einer anderen Anwendung setzt die Schweißnaht an der Stirnfläche des Profilbandes in Abstand zu deren/dessen Außenkante an, und die Querschnittsbreite der Schweißnaht ist geringer als die Dicke des Einschubstabes.

Erfindungsgemäß ist ein Gegenwulst der Schweißnaht vorgesehen, der aus deren Material besteht, welches während des Schweißvorganges zwischen den aneinandergrenzenden Bereichen von Profilband und Einschubstab hindurch an deren Innenfläche tritt und sich mit dieser verbindet. Schweißnaht und Gegenwulst verlaufen zueinander parallel und bilden in Einbaustellung eine Einheit.

Insgesamt ergibt sich so ein gut herstellbares und sicher einzusetzendes Verbundprofil, das eine bestechende Lösung der vom Erfinder gesehenen Aufgabe ermöglicht.

In diesem Zusammenhang sei darauf hingewiesen, dass die aus Stahl geformten Einschubstäbe so modifiziert sind, dass ein seitliches Durchschweißen auf das Leichtmetall des Trägerprofils erfolgt. Dank des Durchschweißens auf das Aluminium ergeben sich u.a. die folgenden Vorteile:
- der Übergangswiderstand ist gleichmäßig gut über die gesamte Länge, also unabhängig von Toleranzen;
- die Stromabnahme kann über die gesamte Stahlfläche gleichmäßig erfolgen;
- ein Verschieben des Stahl- oder Profilbandes 40 auf dem Trägerprofil aufgrund thermischer Belastungen wird ausgeschlossen.

Die Erfindung erfasst auch ein Verfahren zum Herstellen eines Verbundprofils der oben erörterten Ausgestaltung.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine Schrägsicht auf einen Ab- schnitt eines schienenartigen Verbundprofils aus zwei Ver- bundpartnern in Form eines Schienenprofils mit Deckprofil sowie zwei diese verbindenden Bauteilen in Form von rinnenartigen Einschubstäben;
- Fig. 2:: die vergrößerte Stirnansicht des Verbundprofils der Fig. 1, aus dem an dessen rechter Profilseite ein Einschubstab herausgenommen ist;
- Fig. 3:: der in Fig. 2 herausgenommene Einschubstab in Stirnansicht;
- Fig. 4:: die Stirnansicht des als Verbund- partner in Fig. 1 eingesetzten Deckprofils;
- Fig. 5:: einen vergrößerten Ausschnitt aus Fig. 2 mit dem dort nicht gezeigten Einschubstab in Ver- bindungsposition;
- Fig. 6:: eine der Fig. 5 entsprechende Wiedergabe einer anderen Aus- gestaltung des in Fig. 5 skiz- zierten Ausschnittes;
- Fig. 7:: eine der Fig. 2 etwa entsprechende, gegenüber dieser vergrößerte Stirnansicht einer anderen Ausgestaltung des Verbundprofils;
- Fig. 8 bis 10:: Skizzen zu Herstellungsschritten für die Stromschiene;
- Fig. 11:: eine Skizze eines Fertigungsge- stells für die Stromschiene;
- Fig. 12:: einen vergrößerten Ausschnitt aus der Stromschiene im Ferti- gungsgestell in Stirnansicht der Fig. 11.

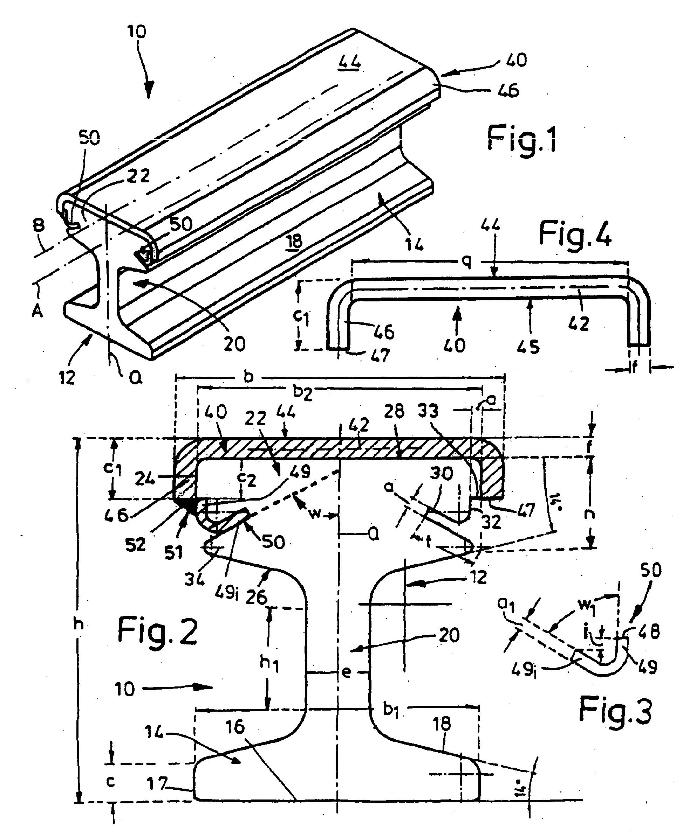

Ein Verbundprofil 10 der Höhe h von hier 105 mm und der maximalen Breite b von 92 mm weist nach Fig. 1 ein schienenartiges Trägerprofil 12 mit einem Schienenfuß 14 und einem an diesen mittels eines Schienensteges 20 angeformten strangartigen Schienenkopf 22 auf. Zwei die Fußfläche 16 des Schienenfußes 14 begrenzende Längskanten 17 der Höhe c von 10 mm verlaufen in einem Abstand b₁ von hier 80 mm parallel zueinander.

Von diesen Längskanten 17 sind die beiden zu ihnen hin etwas geneigten Firstflächen 18 des Schienenfußes 14 zu der die Längsachse A des Verbundprofils 10 querenden Querschnittsmittelachse Q geringfügig aufwärts geneigt und gehen in jenen axialen Schienensteg 20 der Höhe h₁ von etwa 30 mm sowie der Dicke e von etwa 18 mm über. An das obere Ende des Schienensteges 20 schließen die zu den Längskanten 24 des Schienenkopfes 22 reichenden Unterfläche 26 an, dessen Breite b₂ etwa 78 mm misst und dessen Außenhöhe n von etwa 28 mm die Lage der Schienenkopf-Oberfläche 28 bestimmt.

Von jeder der Längskanten 24 des Schienenkopfes 22 geht in Fig. 1, 2 ein in einem Winkel w von etwa 60° zur Querschnittslängsachse Q aufwärts geneigter Steckschlitz 30 der Breite a von hier 3 mm und der Tiefe t von 18 mm aus, dessen in Fig. 2 untere Wandfläche in eine Art Längsrippe 34 des Schienenkopfes 22 übergeht; die Außenseite der Längsrippe 34 wird von jener Unterfläche 26 gebildet. In die Längskante 24 ist -- unter Bildung einer Querschnittsstufe 33 -- eine Längseinformung 32 eingebracht als räumliche Verlängerung des querschnittlich V-artigen Schlitzes 30, die auch dessen Breite a anbietet.

Dieses Schienen- oder Trägerprofil 12 des Verbundprofils 10 wird in einer aus Gründen der Übersichtlichkeit in der Zeichnung nicht wiedergegebenen Strangpresse aus einem Leichtmetallwerkstoff, insbesondere aus einer Aluminiumlegierung, geformt.

Die ebene Kopf- oder Oberfläche 28 des Schienenprofils 12 bzw. seines Schienenkopfes 22 wird in Endzustand von einem Profilband 40 der Dicke f von 6 mm überspannt, das aus einem Eisen- oder Buntmetall hergestellt ist. Dieses Profilband 40 ist querschnittlich rinnenartig geformt, und seine von einer Grundplatte 42 ausgehenden -- zueinander sowie zur Längsachse B des Profilbandes 40 parallelen -- Seitenschenkel 46 der Höhe c₁ von 18 mm liegen den Längskanten 24 des Schienenkopfes 22 an. In dieser Lage bildet die ebene Außenfläche 44 der Breite q des Profilbandes 40 die Oberfläche des Verbundprofils 10.

Jedem Seitenschenkel 46 des der Oberfläche 28 des Schienenkopfes 22 aufliegenden Profilbandes 40 ist innenseitig ein rinnenartiger Einschubstab 50 etwa V-förmigen Querschnitts eines Öffnungswinkels w₁ von etwa 60° achsparallel zugeordnet, dessen querschnittlich lineare Rinnenschenkel 49, 49ᵢ eine Dicke a₁ anbieten, die mit geringem Spiel der Breite a des Steckschlitzes 30 entspricht und hier beispielsweise 2,8 mm misst. Der in Fig. 3 rechte Rinnenschenkel 49 des auch als Ankerstab bezeichneten Einschubstabes 30 fluchtet in Einbaulage mit seiner Außenfläche -- parallel zur Querschnittslängsachse Q verlaufend -- mit der Innenfläche des Seitenschenkels 46 des Profilbandes 40. Der Abstand c₂ der Stirnkante 47 des Profilband-Seitenschenkels 46 -- und damit auch der Längskante 48 eines Rinnenschenkels 49 des Einschubstabes bzw. -profiles 50 von der inneren Unterfläche 45 des Profilbandes 40 -- beträgt hier 11,9 mm; die Längskante 48 des Rinnenschenkels 49, die gemäß Fig. 3 in nur geringem axialem Parallelabstand i zum freien Ende des anderen Rinnenschenkels 49ᵢ verläuft, fluchtet in Einbaustellung etwa mit der Stirnfläche 47 des Profilband-Seitenschenkels 46.

Die Stirnfläche 47 des Profilseitenschenkels 46 wird mit jener Längskante 48 des Rinnenschenkels 49 durch eine bei 52 angedeutete Schweißnaht dichtend verschweißt. Letztere verläuft an jener Stirnfläche 47 des Profilband-Seitenschenkels 46 sowie an der Außenfläche des äußeren Rinnenschenkels 49 so, dass ihre -- eine Pultfläche bildendeAußenfläche 51 in einem Winkel y von etwa 40° querschnittlich zum Einschubstab 50 geneigt ist. Bevorzugt ist ein Querschnitt der Schweißnaht 52 in der Art eines rechtwinkeligen und gleichschenkeligen Dreiecks, dessen beide den rechten Winkel begrenzende Schenkel also von etwa gleicher Länge sind; die Pultfläche 51 ist dann eine Hypotenuse.

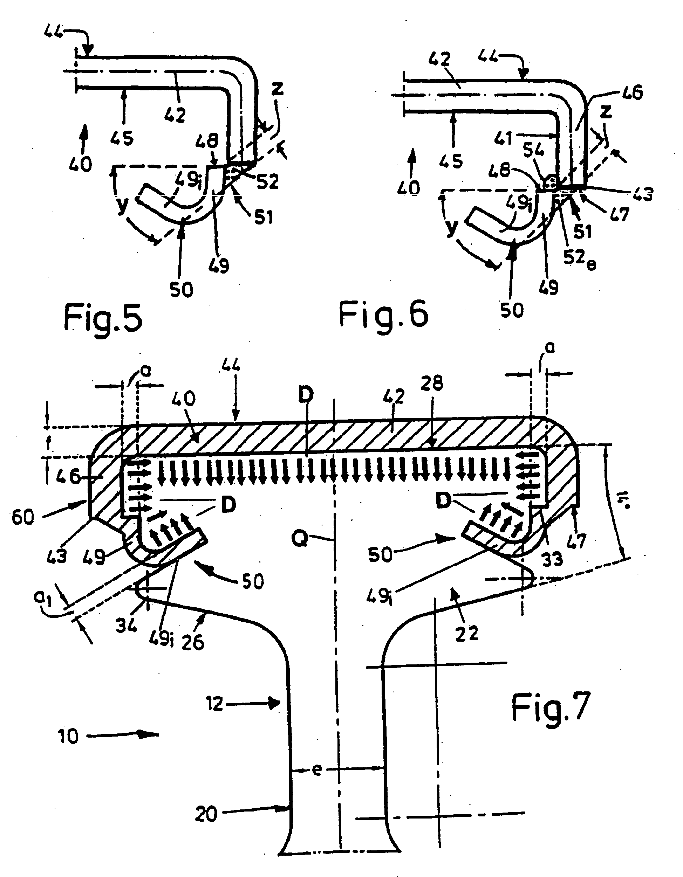

Jeder Seitenschenkel 46 des Profilbandes 40 bildet dank der beschriebenen Lage der Schweißnaht 52 mit dieser und dem Einschubstab 50 eine feste Einheit. In Fig. 5 gehen die Schweißnaht 52 und ihre Pultfläche 51 von der Außenkante der Stirnfläche 47 aus. Dabei misst die Querschnittsbreite z der Schweißnaht 52 etwa 3 mm, entspricht also damit etwa der Dicke a₁ der Wandung des Einschubstabes 50. In Fig. 6 ist die Querschnittsbreite z der Schweißnaht 52ₑ geringer, da hier die Pultfläche 51 an der Stirnfläche 47 in Abstand zu deren Außenkante 43 ansetzt. Es wird maximal 1/10 mm bis 2/10 mm an der Stirnfläche 47 frei gelassen, damit das Schweißgut das Aluminium aufzunehmen vermag. Der andere Rinnenschenkel 49ᵢ ist in den benachbarten Schlitz 30 des Schienenkopfes 22 eingefügt. Der Winkel y misst hier etwa 45°.

In Fig. 6 ist als weitere Ausgestaltung bei 54 ein Gegenwulst der Schweißnaht 52ₑ angedeutet, der an der Innenseite des geschlossenen Spaltes zwischen dem Seitenschenkel 46 und dem Einschubprofil 50 dank eines zwischen den beiden Teilen 46, 50 bestehenden Durchgangsspaltes durchgehend gebildet wird. Dieser Gegenwulst 54 kann sowohl an dieser Schweißnaht 52ₑ entstehen als auch an der Schweißnaht 52 der Fig. 5.

Es entsteht ein unter mechanischer Vorspannung stehender dauerhafter und dichter Verbund der beiden Verbundpartner 12, 40 des Verbundprofils 10. Diese Vorspannung zwischen den Verbundpartnern bestimmt deren Verwendungsfähigkeit; denn diese Vorspannung ist existentiell für die Übergangswiderstände, das Korrosionsverhalten und damit für die Lebensdauer der Stromübertragung.

In Fig. 7 ist der gegenüber Fig. 2 vergrößerte Kopfbereich des Trägerprofils 12 mit einer seine Kopffläche 28 überspannenden -- wie gesagt: bevorzugt aus Stahl bestehenden -- Kopfhaube 60 zu erkennen, deren Querschnitt durch eine aus dem Deckprofil 40, den beiden Einschubstäben 50 sowie den diese zu einer Einheit verbindenden Schweißnähten 52 entstanden ist. Mit den Pfeilen bei D ist die gleichmäßige Stromübergabe von der Kopfhaube 60 an den Schienenkopf 22 symbolisiert.

Beispielhaft sind nachfolgend Querschnittswerte der eingesetzten Materialien Aluminium (Ziffer I) und Stahl (Ziffer II) zusammengestellt:

| I | | | II | |
|---|---|---|---|---|
| Querschnittsfläche: | 4517.28 mm2 | | Querschnittsfläche: | 778,34 mm2 |
| Dichte: | 2.7 kg/dm3 | | Dichte: | 7,8 kg/dm3 |
| Laufmetergewicht: | 12.197 kg/m | | Laufmetergewicht: | 6.071 kg/m |
| | | | | |
| Schwerpunktsystem | | | Schwerpunktsystem | |
| Trägheitsmoment Ix: | 164.61 cm4 | | Trägheitsmoment Ix: | 72.49 cm4 |
| Trägheitsmoment Iy: | 527.13 cm4 | | Trägheitsmoment Iy: | 4.66 cm4 |
| Deviationsmoment Ixy: | 0 cm4 | | Deviationsmoment Ixy: | 0 cm4 |
| | | | | |
| Hauptsachensystem | | | Hauptsachensystem | |
| Hauptträgheitsmoment I1: | 164.61cm4 | | Hauptträgheitsmoment I 1: | 4.66cm4 |
| Hauptträgheitsmoment I 2: | 527.13 cm4 | | Hauptträgheitsmoment I 2: | 72.49 cm4 |
| | | | | |
| Länge Außenkontur: | 485.34 mm | | Länge Außenkontur: | 328.31 mm |
| Länge Innenkontur: | 0 mm | | Länge Innenkontur: | 0 mm |

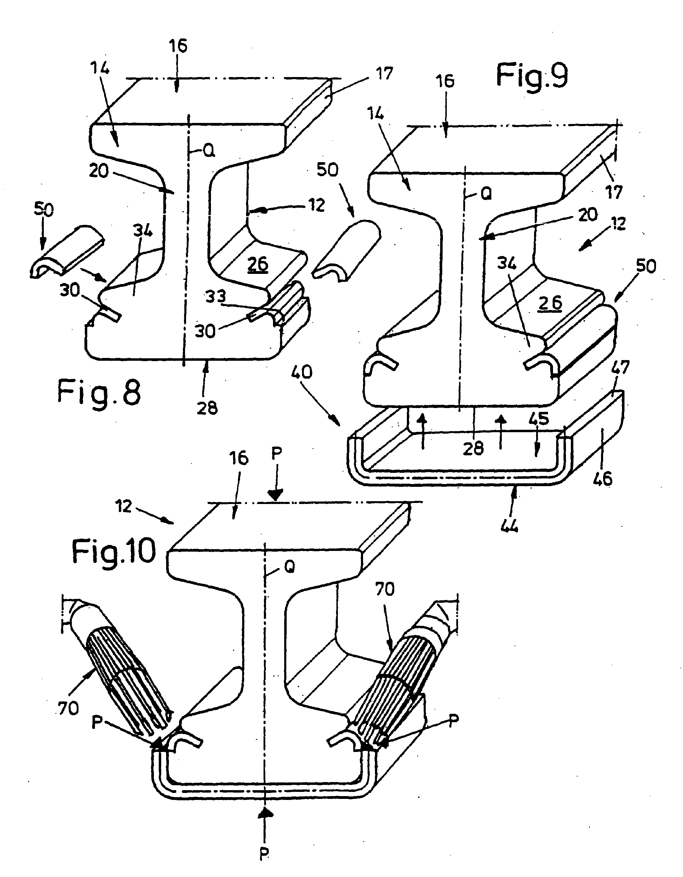

Die Fig. 8 bis 12 verdeutlichen das erfindungsgemäße Herstellungsverfahren. Zuerst werden dem stranggepressten Schienenprofil 12 gemäß Fig. 8 die beiden Einschubstäbe 50 aus Edelstahl zugeführt und deren innere Rinnenschenkel 49ᵢ in die jeweiligen Steckschlitze 30 eingeschoben. Dann erfolgt das Anpressen aller Edelstahlprofile, also der Einschubstäbe 50 und des Deckprofils 40, letzteres an die Kopffläche 28 des Schienen- bzw. Trägerprofils 12 (Fig. 9). Anschließend werden diese Teile unter Druck P verschweißt; eingesetzte Schweißdüsen sind mit 70 kenntlich gemacht.

Wie bereits erwähnt, sind die aus Stahl geformten Einschubstäbe 50 so modifiziert, dass ein seitliches Durchschweißen auf das Aluminium des Trägerprofils 12 erfolgt. Das Durchschweißen auf das Aluminium führt vor allem dazu, dass der Übergangswiderstand gleichmäßig gut über die gesamte Länge ist -- also unabhängig von Toleranzen --, und die Stromabnahme kann über die gesamte Stahlfläche gleichmäßig erfolgen. Zudem ist ein Verschieben des Stahl- oder Profilbandes 40 auf dem Trägerprofil 12 aufgrund thermischer Belastungen ausgeschlossen.

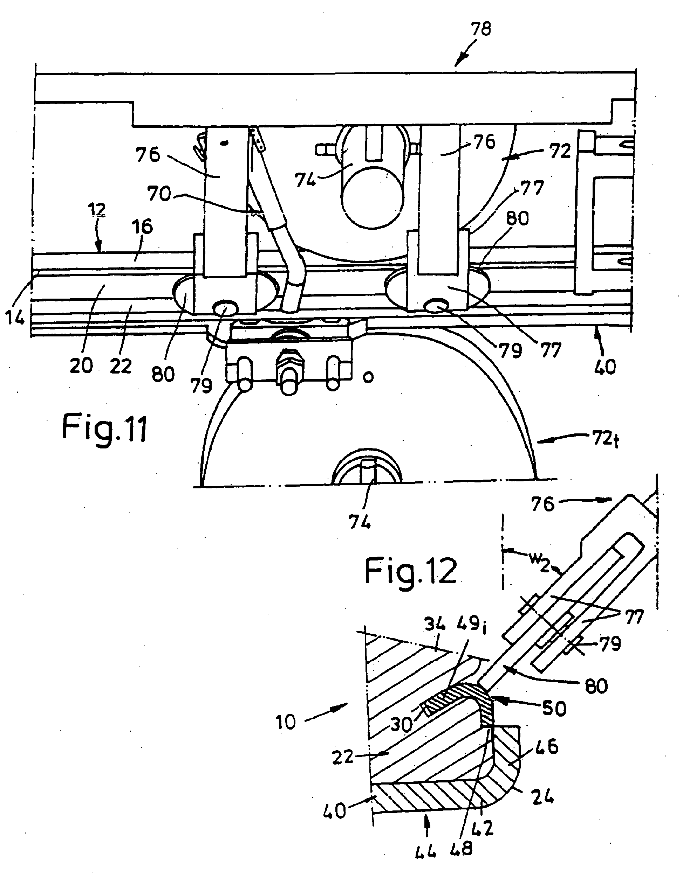

Einer unteren Andruckrolle 72ₜ liegt in Fig. 11 die Einheit aus Deckprofil 40 und Schienenprofil 12 auf, dem -- nicht sichtbar -- die beiden Einschubstäbe 50 zugeordnet sind. Eine obere Andruckrolle 72 ist der Fußfläche 16 des Schienenfußes 14 zugeordnet. Diese auf parallelen Wellen 74 lagernden und angepassten Spezialrollen 72, 72ₜ üben den erforderlichen vertikalen Druck aus, während an Lagerarmen 76 eines Firstgestells 78 geneigt an Achsbolzen 79 von Haltescheiben 77 drehbare seitliche Druckscheiben 80 Druck auf die Einschubstäbe 50 ausüben. Hier handelt es sich um eine modifizierte Rollenrichtmaschine für Leichtmetallprofile. Um dabei eine optimale Vorspannung zu erreichen, wird zwischen den Andruckrollen 72, 72ₜ aus antimagnetischem Werkstoff geschweißt -- und zwar werden die beiden Seiten gleichzeitig bearbeitet.

Fig. 12 zeigt einen wesentlichen Ausschnitt der erfindungsgemäßen Stromschiene 10, welche die geforderte Vorspannung anbietet. Zu erkennen ist ein Eckbereich des Schienenkopfes 22 mit Steckschlitz 30 sowie in letzterem festliegenden Einschubstab 50, der anderseits an den Seitenschenkel 46 des Profilbandes oder Deckprofils 40 angefügt ist und durch jene-- in einem Neigungswinkel w₂ von etwa 35° gehaltenenDruckscheiben 80 während des Schweißvorganges angepresst wird.

## Patentansprüche

1. Verbundprofil mit einem aus Leichtmetallwerkstoff stranggepressten schienenartigen Trägerprofil (12) sowie einem seiner Kopffläche (28) aufliegenden Profilband (40) aus einem härteren Metall, dessen Querschnitt beidends jeweils eine Ausnehmung (30) im Trägerprofil (12) zugeordnet ist, wobei das Trägerprofil (12) und das Profilband (40) miteinander kraft- und/oder formschlüssig verbunden sind, wobei an das der Kopf- oder Oberfläche (28) des Trägerprofils (12) aufliegende Profilband (40) an seinen Längsseiten jeweils ein zu seiner Längsachse (B) paralleler, aus dem Werkstoff des Profilbandes (40) geformter Einschubstab (50) angefügt ist, der anderseits in einen seitlichen Schlitz (30) des Trägerprofils (12) eingreift sowie mit dem Profilband (40) durch eine Schweißnaht (52, 52e) verbunden ist, wobei das rinnenartige Profilband (40) mit seinem Einschubstab (50) unter mechanischer Vorspannung am Trägerprofil (12) festgelegt ist, wobei ein rinnenartiger Einschubstab (50) etwa V-förmigen Querschnittes vorgesehen ist, der mit der Längskante (48) eines seiner äußeren Rinnenschenkel (49) der Stirnfläche (47) eines Seitenschenkels (46) des Profilbandes (40) zugeordnet und mit der Stirnfläche (47) durch die Schweißnaht (52, 52ₑ) fest verbunden ist, **dadurch gekennzeichnet, dass** in Einbaulage die Stirnfläche (47) des Seitenschenkels (46) des Profilbandes (40) mit der Längskante (48) des äußeren Rinnenschenkels (49) etwa fluchtet, und dass der Schweißnaht (52, 52ₑ) ein sich an die von ihr abgekehrten inneren Flächen (42, 48) des Profilbandes (40) sowie des Einschubstabes (50) anschmiegender Gegenwulst (54) aus dem Werkstoff der Schweißnaht (52, 52ₑ) zugeordnet ist.

2. Verbundprofil nach Anspruch 1, **dadurch gekennzeichnet, dass** der zur Längsachse (B) des Profilbandes (40) hin gerichtete andere Rinnenschenkel (49ᵢ) mit dem äußeren Rinnenschenkel (49) einen Öffnungwinkel (w₁) von weniger als 90° einschließt sowie in einem zur Querschnittslängsachse (Q) des Trägerprofils (12) in einem entsprechenden Winkel (w) geneigten Schlitz (30) lagert.

3. Verbundprofil nach Anspruch 2, **dadurch gekennzeichnet, dass** der Öffnungswinkel (w₁) des Rinnenquerschnittes 60° bis 70°, bevorzugt 65°, misst.

4. Verbundprofil nach einem der Ansprüche 1 bis 3, **dadurch gekennzeichnet, dass** die Längskante (48) des äußeren Rinnenschenkels (49) in einem geringen axialen Parallelabstand (i) zum freien Ende des anderen Rinnenschenkels (49ᵢ) verläuft.

5. Verbundprofil nach Anspruch 1, **gekennzeichnet durch** einen V-förmigen Querschnitt des Schlitzes (30) im Schienenkopf (22) des Trägerprofils (12), wobei einer der Schlitzschenkel eine Längseinformung (32) in der Seiten- oder Längsfläche (24) des Schienenkopfes ist, die an einer mit der Stirnfläche (47) des Seitenschenkels (46) des Profilbandes (40) fluchtenden radialen Querschnittsstufe (33) endet.

6. Verbundprofil nach einem der Ansprüche 1 bis 5, **dadurch gekennzeichnet, dass** die Schweißnaht (52, 52ₑ) einen etwa dreiecksförmigen Querschnitt mit zwei zueinander rechtwinkeligen Seiten aufweist, deren eine der Stirnfläche (47) des Profilbandes (40) und deren andere der Außenfläche des zugeordneten Rinnenschenkels (49) des Einschubstabes (50) angeformt ist.

7. Verbundprofil nach Anspruch 6, **dadurch gekennzeichnet, dass** die beiden Seiten des etwa gleichschenkeligen Querschnittes der Schweißnaht (52, 52ₑ) durch eine Hypotenuse als Pultfläche (51) verbunden sind.

8. Verbundprofil nach Anspruch 6 oder 7, **dadurch gekennzeichnet, dass** die Schweißnaht (52) mit ihrer Pultfläche (51) an der Außenkante (43) der Stirnfläche (47)des Profilbandes (40) ansetzt.

9. Verbundprofil nach Anspruch 8, **dadurch gekennzeichnet, dass** die Querschnittsbreite (z) der Schweißnaht (52) etwa der Dicke (a₁) des Einschubstabes (50) entspricht.

10. Verbundprofil nach Anspruch 6 oder 7, **dadurch gekennzeichnet, dass** die Schweißnaht (52ₑ) an der Stirnfläche (47) des Profilbandes (40) in Abstand zu deren Außenkante (43) ansetzt.

11. Verbundprofil nach Anspruch 10, **dadurch gekennzeichnet, dass** die Querschnittsbreite (z) der Schweißnaht (52ₑ) geringer ist als die Dicke (a₁) des Einschubstabes (50).

12. Verbundprofil nach Anspruch 1, **gekennzeichnet durch** die Längskante (48) des Einschubstabes (50) sowie den an diese angrenzenden Bereich der Profilinnenfläche (41) des Profilbandes (40) als dem Gegenwulst (54) anliegende Flächen.

13. Verbundprofil nach Anspruch 1 oder 12, **dadurch gekennzeichnet, dass** Schweißnaht (52, 52ₑ) und Gegenwulst (54) zueinander parallel verlaufen.

14. Verbundprofil nach einem der Ansprüche 1, 12 oder 13, **dadurch gekennzeichnet, dass** Schweißnaht (52, 52ₑ) und Gegenwulst (54) in Einbaustellung einstückig sind.

15. Verfahren zum Herstellen eines Verbundprofils nach einem der vorstehenden Ansprüche, wobei aus Leichtmetallwerkstoff ein Trägerprofil (12) mit einer Kopffläche (28) sowie diese beidseits begleitenden Steckschlitzen (30) stranggepresst wird, dass in jeden Steckschlitz (30) ein Einschubstab (50) eingebracht und an einen aus dem Steckschlitz (30) ragenden Abschnitt des Einschubstabes (50) ein die Kopffläche übergreifendes Profilband (40) aus härterem Werkstoff so angelegt wird, dass das Profilhand (40) gegenüber dem Trägerprofil (12) eine Vorspannung aufweist, wobei der Einschubstab (50) mit dem Profilband (40) unter Vorspannung durchgehend verschweißt wird **dadurch gekennzeichnet, dass** durch den Schweißvorgang an der der Schweißnaht (52,52e) benachbarten Innenflächen des Profilbandes (40) sowie des Einschubstabes (50) ein mit der Schweißnaht (52,52e) verbundener Gegenwulst (54) hergestellt wird.

16. Verfahren nach Anspruch 15, **dadurch gekennzeichnet, dass** der Einschubstab (50) an dem Trägerprofil (12) mit Vorspannung festgerollt oder festgedrückt wird.

17. Verfahren nach Anspruch 16, **dadurch gekennzeichnet, dass** das Profilband (40) auf das Trägerprofil (12) mit Vorspannung aufgedrückt wird.

## Claims

1. Composite profile having a rail-like carrier profile (12) extruded from light metal material and a profile band (40), which is supported on the head face (28) thereof and is made of a harder metal, the cross-section of which profile band being associated at each of the two ends with a recess (30) in the carrier profile (12), the carrier profile (12) and the profile band (40) being positively and/or non-positively interconnected, an insertion rod (50) made of the material of the profile band (40) being attached to the profile band (40), which is supported on the head face or upper face (28) of the carrier profile (12), at each of the longitudinal sides thereof, being parallel to the longitudinal axis (B) of said profile band, the other side of said insertion rod engaging with a lateral slit (30) in the carrier profile (12) and being connected to the profile band (40) by a weld seam (52, 52ₑ), the groove-like profile band (40) being fixed under mechanical bias by the insertion rod (50) thereof to the carrier profile (12), a groove-like insertion rod (50) of approximately V-shaped cross-section being provided, the longitudinal edge (48) of one of the outer groove arms (49) thereof being associated with the end face (47) of a lateral arm (46) of the profile band (40) and being rigidly connected to the end face (47) by the weld seam (52, 52ₑ), **characterised in that** in the installed position, the end face (47) of the lateral arm (46) of the profile band (40) is approximately flush with the longitudinal edge (48) of the outer groove arm (49), and **in that** a counter ridge (54), which is adapted to the inner faces (42, 48), remote from the weld seam, of the profile band (40) and the insertion rod (50) and is made of the material of the weld seam (52, 52ₑ), is associated with the weld seam (52, 52ₑ).

2. Composite profile according to claim 1, **characterised in that** the further groove arm (49ᵢ) directed towards the longitudinal axis (B) of the profile band (40) forms an opening angle (w₁) of less than 90° with the outer groove arm (49) and lies in a slit (30) inclined at a corresponding angle (w) to the cross-sectional longitudinal axis (Q) of the carrier profile (12).

3. Composite profile according to claim 2, **characterised in that** the opening angle (w₁) of the groove cross-section measures 60° to 70°, preferably 65°.

4. Composite profile according to any one of claims 1 to 3, **characterised in that** the longitudinal edge (48) of the outer groove arm (49) extends with slight axial parallel spacing (i) from the free end of the further groove arm (49ᵢ).

5. Composite profile according to claim 1, **characterised by** a V-shaped cross-section of the slit (30) in the rail head (22) of the carrier profile (12), one of the slit arms being a longitudinal spheroidisation (32) in the lateral or longitudinal face (24) of the rail head and ending at a radial cross-sectional level (33) flush with the end face (47) of the lateral arm (46) of the profile band (40).

6. Composite profile according to any one of claims 1 to 5, **characterised in that** the weld seam (52, 52ₑ) has an approximately triangular cross-section having two mutually perpendicular sides, one of which is integrally formed in the end face (47) of the profile band (40) and the other of which is integrally formed in the outer face of the associated groove arm (49) of the insertion rod (50).

7. Composite profile according to claim 6, **characterised in that** the two sides of the approximately isosceles cross-section of the weld seam (52, 52ₑ) are connected by a hypotenuse in the form of a sloped face (51).

8. Composite profile according to either claim 6 or claim 7, **characterised in that** the sloped face (51) of the weld seam (52) is positioned against the outer edge (43) of the end face (47) of the profile band (40).

9. Composite profile according to claim 8, **characterised in that** the cross-sectional width (z) of the weld seam (52) approximately corresponds to the thickness (a₁) of the insertion rod (50).

10. Composite profile according to either claim 6 or claim 7, **characterised in that** the weld seam (52ₑ) is positioned on the end face (47) of the profile band (40) with spacing from the outer edge (43) thereof.

11. Composite profile according to claim 10, **characterised in that** the cross-sectional width (z) of the weld seam (52ₑ) is less than the thickness (a₁) of the insertion rod (50).

12. Composite profile according to claim 1, **characterised by** the longitudinal edge (48) of the insertion rod (50) and the region adjacent thereto of the profile inner face (41) of the profile band (40) as faces lying against the counter ridge (54).

13. Composite profile according to either claim 1 or claim 12, **characterised in that** the weld seam (52, 52ₑ) and the counter ridge (54) extend mutually parallel.

14. Composite profile according to any one of claims 1, 12 or 13, **characterised in that** the weld seam (52, 52ₑ) and counter ridge (54) are integrally formed when installed.

15. Method for manufacturing a composite profile according to any one of the preceding claims, a carrier profile (12), which has a head face (28) and insertion slits (30) accompanying said face on both sides, being extruded from light metal material, an insertion rod (50) being introduced into each insertion slit (30), and a profile band (40) of a harder material, which overlaps the head face, being laid on a portion of the insertion rod (50) projecting out of the insertion slit (30), in such a way that the profile band (40) is biased relative to the carrier profile (12), the insertion rod (50) being continuously welded to the profile band (40) under bias, **characterised in that** the welding process on the inner faces, adjacent to the weld seam (52, 52ₑ), of the profile band (40) and insertion rod (50) produces a counter ridge (54) which is connected to the weld seam (52, 52ₑ).

16. Method according to claim 15, **characterised in that** the insertion rod (50) is rolled or pressed firmly on the carrier profile (12) under bias.

17. Method according to claim 16, **characterised in that** the profile band (40) is pressed onto the carrier profile (12) under bias.

## Revendications

1. Profilé composite présentant un profilé de support (12) de type rail filé en matériau en métal léger ainsi qu'une bande profilée (40) reposant sur sa surface de tête (28) en matériau plus dur, dont la section transversale est associée aux deux extrémités à chaque fois à un évidement (30) dans le profilé porteur (12), le profilé porteur (12) et la bande profilée (40) étant connectés l'un à l'autre par engagement par force et/ou par engagement par coopération de forme, une barre d'insertion (50) formée dans le matériau de la bande profilée (40), parallèle à l'axe longitudinal (B) de la bande (40), étant à chaque fois assemblée à la bande profilée (40) reposant sur la surface de tête ou supérieure (28) du profilé porteur (12) au niveau de ses côtés longitudinaux, laquelle barre d'insertion (50) vient par ailleurs en prise dans une fente latérale (30) du profilé porteur (12) et est connectée à la bande profilée (40) par un cordon de soudure (52, 52ₑ), la bande profilée en forme de rigole (40) étant fixée avec sa barre d'insertion (50) par précontrainte mécanique au profilé de support (12), une barre d'insertion en forme de rigole (50) de section transversale approximativement en forme de V étant prévue, laquelle est associée à l'arête longitudinale (48) de l'une de ses branches de rigole extérieures (49) de la surface frontale (47) d'une branche latérale (46) de la bande profilée (40) et est connectée fixement par le cordon de soudure (52, 52ₑ) à la surface frontale (47), **caractérisé en ce que**, dans la position de montage, la surface frontale (47) de la branche latérale (46) de la bande profilée (40) est approximativement en affleurement avec l'arête longitudinale (48) de la branche de rigole extérieure (49), et **en ce que** le cordon de soudure (52, 52ₑ) est associé à un bourrelet opposé (54) en matériau identique au cordon de soudure (52, 52ₑ) se raccordant aux surfaces intérieures qui lui sont opposées (42, 48) de la bande profilée (40) ainsi que de la barre d'insertion (50).

2. Profilé composite selon la revendication 1, **caractérisé en ce que** l'autre branche de rigole (49ᵢ) orientée vers l'axe longitudinal (B) de la bande profilée (40) forme avec la branche de rigole extérieure (49) un angle d'ouverture (w₁) inférieur à 90° et s'appuie dans une fente (30) inclinée par rapport à l'axe longitudinal en section transversale (Q) du profilé de support (12) suivant un angle correspondant (w).

3. Profilé composite selon la revendication 2, **caractérisé en ce que** l'angle d'ouverture (w₁) de la section transversale de rigole mesure 60° à 70°, de préférence 65°.

4. Profilé composite selon l'une quelconque des revendications 1 à 3, **caractérisé en ce que** l'arête longitudinale (48) de la branche de rigole extérieure (49) s'étend à une faible distance axiale parallèle (i) à l'extrémité libre de l'autre branche de rigole (49ᵢ).

5. Profilé composite selon la revendication 1, **caractérisé par** une section transversale de la fente (30) en forme de V dans la tête du rail (22) du profilé de support (12), l'une des branches de la fente étant une formation longitudinale (32) dans la surface latérale ou longitudinale de la tête du rail, qui se termine au niveau d'un étage radial en section transversale (33) en alignement avec la surface frontale (47) de la branche latérale (46) de la bande profilée (40).

6. Profilé composite selon l'une quelconque des revendications 1 à 5, **caractérisé en ce que** le cordon de soudure (52, 52ₑ) présente une section transversale approximativement triangulaire avec deux côtés à angles droits l'un par rapport à l'autre, dont l'un est façonné sur la surface frontale (47) de la bande profilée (40) et l'autre sur la surface extérieure de la branche de rigole associée (49) de la barre d'insertion (50).

7. Profilé composite selon la revendication 6, **caractérisé en ce que** les deux côtés de la section transversale approximativement isocèle du cordon de soudure (52, 52ₑ) sont connectés par une hypoténuse sous forme de surface de pente (51).

8. Profilé composite selon la revendication 6 ou 7, **caractérisé en ce que** le cordon de soudure (52) s'applique avec sa surface de pente (51) contre l'arête extérieure (43) de la surface frontale (47) de la bande profilée (40).

9. Profilé composite selon la revendication 8, **caractérisé en ce que** la largeur en section transversale (z) du cordon de soudure (52) correspond approximativement à l'épaisseur (a₁) de la barre d'insertion (50).

10. Profilé composite selon la revendication 6 ou 7, **caractérisé en ce que** le cordon de soudure (52ₑ) s'applique contre la surface frontale (47) de la bande profilée (40) à distance de son arête extérieure (43).

11. Profilé composite selon la revendication 10, **caractérisé en ce que** la largeur de la section transversale (z) du cordon de soudure (52ₑ) est inférieure à l'épaisseur (a₁) de la barre d'insertion (50).

12. Profilé composite selon la revendication 1, **caractérisé par** l'arête longitudinale (48) de la barre d'insertion (50) ainsi que par la région adjacente à celle-ci de la surface interne profilée (41) de la bande profilée (40) sous forme de surfaces s'appliquant contre le bourrelet opposé (54).

13. Profilé composite selon la revendication 1 ou 12, **caractérisé en ce que** le cordon de soudure (52, 52ₑ) et le bourrelet opposé (54) s'étendent parallèlement l'un à l'autre.

14. Profilé composite selon l'une quelconque des revendications 1, 12 ou 13, **caractérisé en ce que** le cordon de soudure (52, 52ₑ) et le bourrelet opposé (54) sont réalisés d'une seule pièce dans la position de montage.

15. Procédé de fabrication d'un profilé composite selon l'une quelconque des revendications précédentes, dans lequel un profilé de support (12) avec une surface de tête (28) ainsi que des fentes d'enfichage (30) associées à celle-ci de part et d'autre, est filé en matériau en métal léger, en ce que dans chaque fente d'enfichage (30) est introduite une barre d'insertion (50) et, sur une portion de la barre d'insertion (50) saillant hors de la fente d'enfichage (30), est appliquée une bande profilée (40) venant en prise par-dessus la surface de tête, et constituée d'un matériau plus dur, de sorte que la bande profilée (40) présente, par rapport au profilé de support (12), une précontrainte, la barre d'insertion (50) étant soudée en continu avec précontrainte à la bande profilée (40), **caractérisé en ce que** l'on produit, au cours de l'opération de soudage, sur les surfaces internes adjacentes au cordon de soudure (52, 52ₑ) de la bande profilée (40) ainsi que de la barre d'insertion (50), un bourrelet opposé (54) connecté au cordon de soudure (52, 52ₑ).

16. Procédé selon la revendication 15, **caractérisé en ce que** la barre d'insertion (50) est laminée ou pressée fixement sur le profilé de support (12) avec précontrainte.

17. Procédé selon la revendication 16, **caractérisé en ce que** la bande profilée (40) est pressée sur le profilé de support (12) avec précontrainte.
